(19) **Europäisches Patentamt European Patent Office Office européen des brevets**

(11) **EP 3 476 520 B1**

(12) **EUROPEAN PATENT SPECIFICATION**

(45) Date of publication and mention of the grant of the patent:
**22.06.2022 Bulletin 2022/25**

(21) Application number: **17910490.6**

(22) Date of filing: **14.09.2017**

(51) International Patent Classification (IPC):
*C22C 13/02* (2006.01)   *C22C 13/00* (2006.01)
*B23K 35/26* (2006.01)

(52) Cooperative Patent Classification (CPC):
**B23K 35/262; C22C 13/00; C22C 13/02**

(86) International application number:
**PCT/JP2017/033364**

(87) International publication number:
**WO 2019/053866 (21.03.2019 Gazette 2019/12)**

(54) **LEAD-FREE SOLDER ALLOY, ELECTRONIC CIRCUIT BOARD, AND ELECTRONIC CONTROL DEVICE**

BLEIFREIE LÖTLEGIERUNG, ELEKTRONISCHES SCHALTUNGSSUBSTRAT UND ELEKTRONISCHE STEUERUNGSVORRICHTUNG

ALLIAGE DE BRASAGE SANS PLOMB, CARTE DE CIRCUIT ÉLECTRONIQUE ET DISPOSITIF DE COMMANDE ÉLECTRONIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**01.05.2019 Bulletin 2019/18**

(73) Proprietor: **Tamura Corporation**
**Tokyo 178-8511 (JP)**

(72) Inventors:
• **ARAI Masaya**
**Iruma-shi**
**Saitama 358-0032 (JP)**
• **NAKANO Takeshi**
**Iruma-shi**
**Saitama 358-0032 (JP)**
• **HORI Atsushi**
**Iruma-shi**
**Saitama 358-0032 (JP)**

• **KATSUYAMA Tsukasa**
**Iruma-shi**
**Saitama 358-0032 (JP)**
• **MUNEKAWA Yurika**
**Iruma-shi**
**Saitama 358-0032 (JP)**

(74) Representative: **Cabinet Beau de Loménie**
**158, rue de l'Université**
**75340 Paris Cedex 07 (FR)**

(56) References cited:
**WO-A1-2014/163167   WO-A1-2015/152387**
**JP-A- 2016 179 498   JP-A- 2017 170 465**
**US-A1- 2016 056 570   US-A1- 2016 279 741**
**US-A1- 2016 325 384   US-A1- 2016 325 384**
**US-A1- 2016 368 104   US-A1- 2017 014 955**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

BACKGROUND

Technical Field

The present invention disclosure to a lead-free solder alloy, an electronic circuit substrate comprising a solder joint that is formed by using the lead-free solder alloy, and an electronic control device.

Related Art

As a method of joining an electronic component to an electronic circuit that is formed on a substrate such as a printed circuit board and silicon wafer, there are solder-joining methods that use a solder alloy. In the solder alloy, lead was used before. However, use of lead is limited in accordance with RoHS command from the viewpoint of an environmental load. Accordingly, in recent years, a solder-j oining method with a so-called lead-free solder alloy, which does not comprise lead, is generally used.

As the lead-free solder alloy, for example, a Sn-Cu-based solder alloy, a Sn-Ag-Cu-based solder alloy, a Sn-Bi-based solder alloy, a Sn-Zn-based solder alloy, and the like are well known. Among these, in a consumer electronic device that is used in a television, a portable telephone, and the like, and an in-vehicle electronic device that is mounted on a vehicle, Sn-3Ag-0.5Cu solder alloys are widely used.

Solderability of the lead-free solder alloy is slightly inferior to that of a lead-comprising solder alloy. However, a problem related to the solderability was solved through an improvement of flux or a soldering apparatus. Accordingly, for example, even in the in-vehicle electronic circuit substrate, as long as the in-vehicle electronic circuit substrate is placed in a relatively moderate environment such as a vehicle interior of a vehicle with temperature variation, a significant problem does not occur even in a solder joint that is formed by using a Sn-3Ag-0.5Cu solder alloy.

However in recent years, studies and practical applications have been carried out on, for example, electronic circuit boards used for electronic controllers, in view of its implementation in an engine compartment, of its direct mounting on an engine and of its implementation in a body wherein the mechanical parts and electronic parts are integrated with an engine. They are in a harsh environment wherein the temperature difference are particularly significant (for example, a temperature difference from -30°C to 110°C, a temperature difference from -40°C to 125°C, and a temperature difference from -40°C to 150°C), and an vibration load is applied. In the environment in which the temperature different is very significant, thermal displacement of a solder joint due to a difference in a linear expansion coefficient between an electronic component that is mounted and the substrate, and a stress accompanying the thermal displacement are likely to occur.

Repetition of plastic deformation due to the temperature difference is likely to cause a crack in a solder joint. In addition, a stress on a solder joint that is repetitively applied with the passage of time is concentrated to the vicinity of a tip end of the crack, and thus the crack is likely to propagate to a deep portion of the solder joint in a transverse direction. The crack, which significantly propagates, is apt to cause disconnection of electrical connection between the electronic component and an electronic circuit that is formed on the substrate. Particularly, in an environment in which vibration is loaded on the electronic circuit substrate in addition to extreme temperature differences, the crack and the propagation thereof are more likely to occur.

Therefore, in view of the increase in use of the in-vehicle electronic circuit substrate and the electronic control device which are placed in the above-described harsh environment, it is expected that a demand for the Sn-Ag-Cu-based solder alloy capable of exhibiting a sufficient crack propagation suppressing effect will further increase from now on.

In addition, conventionally, a Ni/Pd/Au-plated component or a Ni/Au-plated component has been widely used in a lead portion of an electronic component such as a quad flat package (QFP) and a small outline package (SOP) which are mounted on the in-vehicle electronic circuit substrate. However, recently, along with a reduction in the cost of the electronic component or substrate downsizing, an electronic component in which the lead portion is substituted with Sn plating or an electronic component comprising a Sn-plated lower surface electrode has been examined and put into practical use.

During solder-joining, the Sn-plated electronic component is likely to cause mutual diffusion between Sn comprised in the Sn plating and the solder joint and Cu comprised in the lead portion and the lower surface electrode. Due to the mutual diffusion, a $Cu_3Sn$ layer, which is an intermetallic compound, is greatly grown in a concavo-convex shape in a region in the vicinity of an interface between the solder joint, and the lead portion or the lower surface electrode(hereinafter, referred to as "vicinity of an interface" in this specification) . The $Cu_3Sn$ layer inherently has hard and brittle properties, and thus the $Cu_3Sn$ layer that is greatly grown in the concavo-convex shape becomes more brittle. Accordingly, in the above-described harsh environment, a crack is more likely to occur in the vicinity of the interface in comparison to the solder joint, and crack propagation instantaneously occurs from the crack that is the origin. Accordingly, electrical short-circuiting is likely to occur.

Accordingly, even in a case of using the electronic component without Ni/Pd/Au plating or the Ni/Au plating in a harsh environment, it is expected that demand for the lead-free solder alloy, which is capable of exhibiting the crack propagation suppressing effect in the vicinity of the interface, will increase.

Until now, there are disclosed various methods in which an element such as Ag and Bi is added to the Sn-Ag-Cu-based alloy so as to improve strength of the solder joint and thermal fatigue characteristics, thereby suppressing crack propagation in the solder joint.

Patent Document 8 discloses a lead-free solder alloy includes: 1 wt % to 4 wt % of Ag; 0.5 wt % to 1 wt % of Cu; 1 wt % to 5 wt % of Sb; 0.05 wt % to 0.25 wt % of at least one of Ni and Co; and Sn.

Patent Document 9 discloses a lead-free solder alloy with 1-4 mass % Ag, 0.6-0.8 mass % Cu, 1-5 mass % Sb, 0.01-0.2 mass % Ni and the remainder being Sn.

Patent Document 10 discloses a solder alloy having an alloy composition comprising, in terms of mass %, 3-10% of Sb, 0-40 of Ag and 0.3-1.2% of Cu, with the remainder consisting of Sn. Furthermore, the alloy composition may contain, in terms of mass %, a total of 0.15% or less of one or more elements selected from among Ni and Co and/or a total of 0.02% or less of one or more elements selected from among P and Ge.

Patent Document 11 discloses a SnAgCuSb-based Pb-free solder alloy comprising an additive selected from 0.1-2.5 wt. % of Bi and/or 0.1-4.5 wt. % of In.

Patent Document 12 discloses a lead-free solder alloy which consists of Sb in an amount of more than 3.0% but 10% or less by mass, and the balance including Sn, and others.

PRIOR ART DOCUMENTS

PATENT DOCUMENTS

Patent document 1: JP 5-228685 A

Patent Document 2: JP 9-326554 A

Patent document 3: JP 2000-190090 A

Patent document 4:JP 2000-349433 A

Patent document 5: JP 2008-28413 A

Patent document 6: WO 2009/011341 A

Patent document 7: JP 2012-81521 A

Patent Document 8: US 2016/0279741

Patent Document 9: US 2016/0056570

Patent Document 10: US 2017/0014955

Patent Document 11: US 2016/0325384

Patent Document 12: US 2016/0368104

In a case of adding Bi to the solder alloy, Bi enters an arrangement lattice of atoms in the solder alloy, and substitutes for Sn, thereby deforming the lattice of atoms arrangement. According to this, a Sn matrix is strengthened and alloy strength is improved. Accordingly, a certain level of improvement in the solder crack propagation suppression due to addition of Bi is expected.

However, there is a disadvantage that a ductility of the lead-free solder alloy strengthened by addition of Bi deteriorates, and brittleness of the lead-free solder alloy increases. When the present applicant solder-joined a substrate and a chip resistive component by using a conventional lead-free solder alloy comprising Bi , and placed the resultant substrate in a harsh environment in which a temperature difference is significant, at a fillet portion on the chip resistive component side, a crack propagated linearly at an angle of approximately 45° with respect to the longitudinal direction of the chip resistive component, and thus electrical short-circuiting occurred. Accordingly, particularly, in an in-vehicle substrate that is placed in a harsh environment in which a temperature difference is significant, the crack propagation suppressing effect is not sufficiently obtained only by strengthening by addition of Bi and the like similar to what has been done in the prior art, and thus there is a demand for a new crack propagation suppressing method in addition to the strengthening.

In addition, in a case of performing solder-joining by using an electronic component that is without Ni/Pd/Au plating or the Ni/Au plating, the $Cu_3Sn$ layer, which is an intermetallic compound, is greatly grown in a concavo-convex shape in the vicinity of the interface, and thus it is difficult to suppress crack propagation in the vicinity of the interface.

SUMMARY OF THE INVENTION

PROBLEMS SOLVED BY THE PRESENT INVENTION

An object of the invention is to provide a lead-free solder alloy, and an electronic circuit substrate and an electronic control device which comprises a solder joint that is formed by using the lead-free solder alloy, which can solve the above-described problem, specifically the following problems.

- suppressing crack propagation in a solder joint even in a harsh environment in which a temperature difference is significant and to which vibration is applied.
- suppressing crack propagation in the vicinity of an interface even in a case of performing solder-joining by using an electronic component without Ni/Pd/Au plating or Ni/Au plating.

MEANS TO SOLVE THE PROBLEMS

The subject-matter of the present invention is defined by the claims.

EFFECT OF THE PRESENT INVENTION

According to the lead-free solder alloy of the invention, and the electronic circuit substrate and the electronic control device which comprises a solder joint that is formed by using the lead-free solder alloy have the following effects.

- suppressing crack propagation in a solder joint even in a harsh environment in which a temperature difference is significant and to which vibration is applied.
- suppressing crack propagation in the vicinity of an interface even when performing solder-joining by using an electronic component without Ni/Pd/Au plating or Ni/Au plating.

BRIEF DESCRIPTION OF DRAWINGS

FIG. 1 is a partial cross-sectional view illustrating a part of an electronic circuit substrate according to an which shows a region under an electrode of a chip component embodiment of the invention;
FIG. 2 is a an electron microscope photograph illustrating a cross-sectional view in which voids occurred in a fillet portion of a chip component in a test substrate according to a comparative example of the invention; and
FIG. 3 is a photograph and a region in which fillets are formed, and taken from the chip component side by using an X-ray transmission apparatus in test substrates according to an example and a comparative example of the invention.

EMBODIMENTS TO CARRY OUT THE INVENTION

Hereinafter, description will be given of an embodiment of a lead-free solder alloy, an electronic circuit substrate, and an electronic control device according to the invention. Furthermore, the invention is not limited to the following embodiments.

(1) Lead-Free Solder Alloy

The lead-free solder alloy of this embodiment comprises 2% by weight or more and 4% by weight or less of Ag. When Ag is added, a $Ag_3Sn$ compound precipitates at a Sn grain boundary of the lead-free solder alloy, and thus mechanical strength can be applied thereto.

However, it is not wanted that the amount of Ag is less than 1% by weight, since precipitation of the $Ag_3Sn$ compound is less, and mechanical strength and thermal shock resistance of the lead-free solder alloy deteriorate. In addition, it is not wanted that the amount of Ag is greater than 4% by weight, since ductility of the lead-free solder alloy deteriorates, and there is a concern that a solder joint formed by using the lead-free solder alloy may cause an electrode peeling-off phenomenon in an electronic component.

In addition, if the amount of Ag is set to 2% by weight or more and 3.8% by weight or less, it is possible to obtain a more satisfactory balance between the strength and the ductility of the lead-free solder alloy. The amount of Ag is more preferably 2.5% by weight or more and 3.8% by weight or less.

The lead-free solder alloy of this embodiment comprises 0.5% by weight or more and 0.7% by weight or less of Cu. When Cu is added in this range, a Cu erosion prevention effect with respect to a Cu land of an electronic circuit is exhibited. And in this case, the $Cu_6Sn_5$ compound precipitates at the Sn grain boundary, and as a result, it is possible to improve the thermal shock resistance of the lead-free solder alloy.

Furthermore, when the amount of Cu is set to 0.5% by weight or more and 1% by weight or less, a satisfactory Cu erosion prevention effect can be exhibited. Particularly, if the amount of Cu is 0.7% by weight or less, the Cu erosion prevention effect on Cu land can be exhibited. In addition, the viscosity of the lead-free solder alloy when melted can be maintained in a satisfactory state, and occurrence of voids during reflow is suppressed. As a result, it is possible to improve the thermal shock resistance of the solder joint that is formed. Furthermore, fine $Cu_6Sn_5$ is dispersed at the Sn grain boundary of the lead-free solder alloy that is melted, and the change in crystal orientation of Sn is suppressed. As a result, it is possible to suppress deformation of a solder joint shape (fillet shape).

Furthermore, it is not wanted that the amount of Cu is greater than 1% by weight, since there is a concern that a $Cu_6Sn_5$ compound is likely to precipitate in the vicinity of an interface between the solder-joint with an electronic component and the electronic circuit substrate, and joining reliability and the ductility of the solder joint may deteriorate.

The lead-free solder alloy of this embodiment comprises 3% by weight or more and 5% by weight or less of Sb. When Sb is added in this range, it is possible to improve the crack propagation suppressing effect in the solder joint without deteriorating the ductility of the Sn-Ag-Cu-based solder alloy. When the amount of Sb is set to 3% by weight or more and 5% by weight or less, and more preferably 3.5% by weight or more and 5% by weight or less, it is possible to further improve the crack propagation suppressing effect.

In order to confer resistance against external stress consisting in exposing for a long time to a severe environment in which a temperature difference is significant, it is considered to be efficient to carry out solid-solution strengthening by adding (an) element(s) which enhance(s) the toughness (the size of an area surrounded by a stress-strain line) of the lead-free solder alloy, improve(s) the ductility and dissolve (s) into the Sn matrix. In addition, Sb is an optimal element to realize the solid-solution strengthening of the lead-free solder alloy while ensuring sufficient toughness and ductility.

That is, when the above-described range of Sb is added to the lead-free solder alloy in which Sn is substantially set as a base material (in this specification, the base material indicates the main constituent element of the lead-free solder alloy. The same shall apply hereinafter), a part of a crystal lattice of Sn is substituted with Sb, and thus deformation occurs in the crystal lattice. Accordingly, in the solder joint that is formed by using the lead-free solder alloy, energy necessary for dislocation in the crystal increases when a part of the Sn crystal lattice is substituted with Sb, and thus the metallic structure is strengthened. Furthermore, fine SnSb and $\varepsilon$-$Ag_3$ (Sn, Sb) compounds precipitate at the Sn grain boundary, and thus sliding deformation of the Sn grain boundary is prevented. As a result, it is possible to suppress propagation of a crack that occurs in the solder joint.

In addition, it was confirmed that in the structure of the solder joint formed by using the lead-free solder alloy to which Sb is added in the above-described range, even after being exposed to a harsh environment in which the temperature difference is significant for a long period of time, a Sn crystal remains in a further fine state in comparison to the Sn-3Ag-0.5Cu solder alloy, and thus a crack is less likely to propagate. The reason for this is considered as follows. Even after the SnSb and $\varepsilon$-$Ag_3$ (Sn, Sb) compounds, which have precipitated at the Sn grain boundary, are exposed to the harsh environment in which the temperature difference is significant for a long period of time, the compounds remain finely dispersed in the solder joint, and thus coarsening of the Sn crystal is suppressed. That is, in the solder joint that is formed by using the lead-free solder alloy wherein Sb is added in the above-described range, formation of a solid solution of Sb in the Sn matrix occurs in a high-temperature state, and precipitation of the SnSb and $\varepsilon$-$Ag_3$ (Sn, Sb) compounds occurs in a low-temperature state. Accordingly, even in a case of being exposed to the harsh environment in which the temperature difference is significant, a solid-solution strengthening process at a high temperature and a precipitation strengthening process at a low temperature are repeated, and thus it is considered that excellent thermal shock resistance can be ensured.

In addition, it is possible to further improve the strength of the lead-free solder alloy wherein Sb is added in the above-described range without deteriorating the ductility in comparison with the Sn-3Ag-0.5Cu solder alloy. As a result, it is possible to ensure sufficient toughness against an external stress, and it is also possible to reduce a residual stress.

Here, if a solder joint formed by using a solder alloy having a low ductility is placed in a harsh environment in which the temperature difference is significant, a stress that repetitively occurs is likely to be accumulated on the electron component side of the solder joint. Accordingly, a deep crack frequently occurs in the solder joint in the vicinity of an electrode of an electronic component. As a result, the stress is concentrated at the electrode of the electronic component in the vicinity of the crack, and thus the solder joint may peel off the electrode on the electronic component side. However, in the solder alloy according to this embodiment, since Sb is added in the above-described range, even when comprising an element such as Bi that has an effect on the ductility of the solder alloy, the ductility is less likely to deteriorate. In addition, even in a case of being exposed to the harsh environment as described above for a long period of time, the electrode peeling-off phenomenon in the electronic component can be suppressed.

Furthermore, if the amount of Sb is less than 3%, energy necessary for dislocation in the crystal increases at a part of the Sn crystal lattice due to the substitution with Sb, and the metallic structure can be solid-solution strengthened, but fine compounds such as SnSb and $\varepsilon$-Ag$_3$ (Sn, Sb) cannot sufficiently precipitate at the Sn grain boundary. According to this, when a solder joint formed by using the solder alloy is exposed to a harsh environment in which the temperature difference is significant for a long period of time, the Sn crystal is enlarged, and thus the solder joint is changed into a structure in which a crack is likely to propagate. Accordingly, it is difficult to ensure sufficient thermal fatigue resistance of the solder joint.

In addition, if the amount of Sb is greater than 5% by weight, the melting temperature of the lead-free solder alloy is raised, and thus Sb does not re-dissolve again at a high temperature. Accordingly, a solder joint which is formed by using such solder alloy is in a case of being exposed to a harsh environment in which the temperature difference is significant for a long period of time, only the precipitation strengthening by the SnSb and $\varepsilon$-Ag$_3$ (Sn, Sb) compounds occurs. And thus, the intermetallic compounds become coarsened with the passage of time, and as a result, the slip deformation suppressing effect at the Sn grain boundary is lost. In addition, in this case, this is not preferable because a heat resisting temperature of the electronic component also becomes relevant due to the rising of the melting temperature of the lead-free solder alloy.

According to the constitution of the lead-free solder alloy of this embodiment, even when the amount of Sb is set to 3% by weight or more and 5% by weight or less, excessive rising of the melting temperature of the lead-free solder alloy is suppressed, and satisfactory strength is given to a solder-joined body that is formed. Accordingly, in the lead-free solder alloy of this embodiment, even though Bi is not set as an essential element, it is possible to sufficiently exhibit the crack propagation suppressing effect in the solder joint that is formed.

The lead-free solder alloy of this embodiment comprises 0.03% by weight of Ni. According to the constitution of the lead-free solder alloy of this embodiment, when Ni is added in the above amount, fine (Cu, Ni)$_6$Sn$_5$ is formed in the lead-free solder alloy that is melted, and is dispersed in a base material. Accordingly, propagation of a crack in the solder joint can be suppressed, and thermal fatigue resistance thereof can be improved.

In addition, even when the lead-free solder alloy of this embodiment is used to solder-join an electronic component without Ni/Pd/Au plating or Ni/Au plating, Ni moves to the vicinity of the interface during solder-joining and forms fine (Cu, Ni)$_6$Sn$_5$. Accordingly, it is possible to suppress growth of the Cu$_3$Sn layer in the vicinity of the interface, and thus it is possible to improve the crack propagation suppressing effect in the vicinity of the interface.

However, if the amount of Ni is less than 0.01% by weight, the modifying effect of the intermetallic compounds is not sufficient, and thus it is difficult to sufficiently obtain a crack suppressing effect in the vicinity of the interface. In addition, if the amount of Ni is greater than 0.25% by weight, over-cooling is less likely to occur in comparison to conventional Sn-3Ag-0.5Cu alloy, and thus solidification timing of a solder alloy becomes earlier. In such a case, in a fillet of a solder joint that is formed, it is confirmed that a gas in the course of getting out during melting of the solder alloy, remains in the fillet and is solidified as is, and voids occur in the fillet due to the gas in some cases. Particularly, the voids in the fillet are apt to deteriorate the thermal fatigue resistance of the solder joint in a harsh environment in which a temperature difference such as a temperature difference from -40°C to 140°C and a temperature difference from -40°C to 150°C.

Furthermore, as described above, Ni is likely to cause voids in the fillet. However, in the constitution of the lead-free solder alloy of this embodiment, even when Ni is comprised in an amount of 0.25% by weight or less, it is possible to suppress occurrence of the voids due to a balance in an amount between Ni and other elements.

In addition, when the amount of Ni is set to 0.01% by weight or more and 0.15% by weight or less, it is possible to improve the void occurrence suppressing effect while improving the crack propagation suppressing effect in the vicinity of the interface and the thermal fatigue resistance.

The lead-free solder alloy of this embodiment may comprise 0.001% by weight or more and 0.25% by weight or less of Co in addition to Ni. According to the constitution of the lead-free solder alloy of this embodiment, when Co is added in this range, the above-mentioned effect obtained due to addition of Ni is enhanced, and at the same time, fine (Cu, Co)$_6$Sn$_5$ is formed in the lead-free solder alloy that is melted and is diffused in the base material, and thus it is possible to improve the thermal fatigue resistance of the solder joint even in a harsh environment in which the temperature difference is significant while suppressing creep deformation and crack propagation in the solder joint.

In addition, even when the lead-free solder alloy of this embodiment is used to solder-join an electronic component without Ni/Pd/Au plating or Ni/Au plating, the above-described effect obtained due to addition of Ni is enhanced, and Co moves to the vicinity of the interface during solder-joining to form fine $(Cu, Co)_6Sn$. And thus, it is possible to suppress growth of the $Cu_3Sn$ layer in the vicinity of the interface and it is possible to improve the crack propagation suppressing effect in the vicinity of the interface.

However, when the amount of Co is less than 0.001% by weight, the above-described intermetallic compound modifying effect due to Co addition becomes not sufficient, and thus it is difficult to sufficiently obtain the crack suppressing effect in the vicinity of the interface. In addition, when the amount of Co is greater than 0.25% by weight, over-cooling is less likely to occur in comparison to conventional Sn-3Ag-0.5Cu alloy, and thus solidification of a solder alloy occurs earlier. Accordingly, in a fillet of a solder joint that is formed, it is confirmed that a gas, in the course of getting out during melting of the solder alloy, remains in the fillet and is solidified as is, and voids occur in the fillet due to the gas in some cases. Particularly, the voids in the fillet deteriorate the thermal fatigue resistance of the solder joint in a harsh environment in which the temperature difference is significant.

Furthermore, as described above, Co is likely to cause voids in the fillet. However, in the constitution of the lead-free solder alloy of this embodiment, even when Co is comprised in an amount of 0.25% by weight or less, it is possible to suppress occurrence of the voids due to a balance of amounts between Co and other elements.

In addition, when the amount of Co is set to 0.001% by weight or more and 0.15% by weight or less, it is possible to improve the void occurrence suppressing effect while improving the crack propagation suppressing effect and the thermal fatigue resistance.

Here, in case of using both Ni and Co in the lead-free solder alloy of this embodiment, it is preferable that the amount of Ag, Cu, Sb, Ni, and Co, in terms of % by weight, satisfies the entirety of the following Expressions (A) to (D).

$$1.6 \leq \text{the amount of Ag} + (\text{the amount of Cu}/0.5) \leq 5.4 \ldots (A)$$

$$0.73 \leq (\text{the amount of Ag}/4) + (\text{the amount of Sb}/5) \leq 2.10 \ldots (B)$$

$$1.1 \leq \text{the amount of Sb}/\text{the amount of Cu} \leq 11.9 \ldots (C)$$

$$0 < (\text{the amount of Ni}/0.25) + (\text{the amount of Co}/0.25) \leq 1.19 \ldots (D)$$

When the amount of Ag, Cu, Sb, Ni, and Co is set in the above-described ranges, even though Bi is not set as an essential element, it is possible to exhibit all the following effects in a well-balanced manner, and as a result, it is possible to further improve reliability of the solder joint.

- suppressing deterioration of the ductility and increase in brittleness of the solder joint.
- improving the strength and the thermal fatigue resistance of the solder joint.
- suppressing voids that occur in the fillet. suppressing crack propagation in the solder joint in a harsh environment in which the temperature difference is significant.
- crack propagation suppression effect in the vicinity of the interface during solder-joining of an electronic component without Ni/Pd/Au plating or Ni/Au plating.

In addition, the lead-free solder alloy of this embodiment may comprise 6% by weight or less of In. When In is added in this range, the melting temperature of the lead-free solder alloy, which is raised due to addition of Sb, is lowered, and it is possible to improve the crack propagation suppressing effect. That is, as is the case with Sb, In forms a solid-solution in the Sn matrix, it is possible to further strengthen the lead-free solder alloy. In addition, a AgSnIn compound and an InSb compound are formed, and these compounds precipitate at the Sn grain boundary. As a result, it is possible to obtain an effect of suppressing the sliding deformation at the Sn grain boundary.

It is not wanted that the amount of In that is added to the solder alloy of the embodiment is greater than 6% by weight, since the ductility of the lead-free solder alloy deteriorates, and $\gamma$-InSn$_4$ is formed during exposure to a harsh environment in which the temperature difference is significant for a long time, and thus the lead-free solder alloy is self-deformed.

Furthermore, the amount of In is preferably 4% by weight or less, and more preferably 1% by weight or more and 2% by weight or less.

In addition, the lead-free solder alloy of this embodiment may comprise at least one of P, Ga, and Ge in an amount of 0.001% by weight or more and 0.05% by weight or less. When at least one of P, Ga, and Ge is added in this range, it is possible to prevent oxidation of the lead-free solder alloy. However, it is not wanted that the amount of the elements is greater than 0.05% by weight, since the melting temperature of the lead-free solder alloy is raised, and voids are likely to occur in the solder joint.

In addition, the lead-free solder alloy of this embodiment may comprise at least one of Fe, Mn, Cr, and Mo in an amount of 0.001% by weight or more and 0.05% by weight or less. When at least one of Fe, Mn, Cr, and Mo is added in this range, it is possible to improve the crack propagation suppressing effect of the lead-free solder alloy. However, it is not wanted that the amount of the elements is greater than 0.05% by weight, since the melting temperature of the lead-free solder alloy is raised, and voids are likely to occur in the solder joint.

In addition, unavoidable impurities may be comprised in the lead-free solder alloy of this embodiment.

In addition, the balance of the lead-free solder alloy of this embodiment is Sn. Furthermore, the amount of Sn is equal to or greater than 83.4% and less than 95.99% by weight.

For example, the solder joint of this embodiment may be formed by using any method capable of forming the solder joint such as a flow method, mounting by a solder ball, and a reflow method using a solder paste composition. Furthermore, among the methods, the reflow method using the solder paste composition is particularly preferably used.

(2) Solder Paste Composition

For example, the solder paste composition is prepared by kneading the lead-free solder alloy having a powder form, and flux into a paste form.

As the flux, for example, flux comprising a resin, a thixo agent, an activating agent, and a solvent is used.

Examples of the resin include rosin-based resins comprising rosin such as tall oil rosin, gum rosin, and wood rosin, rosin derivatives such as hydrogenated rosin, polymerized rosin, heterogenized rosin, acrylic acid modified rosin, and maleic acid modified rosin; acrylic resins obtained by polymerizing at least one of monomer such as acrylic acid, methacrylic acid, various esters of acrylic acid, various esters of methacrylic acid, crotonic acid, itaconic acid, maleic acid, maleic anhydride, esters of maleic acid, esters of maleic anhydride, acrylonitrile, methacrylonitrile, acrylamide, methacrylamide, vinyl chloride, and vinyl acetate; an epoxy resin; a phenol resin; and the like. These resins may be used alone or in combination of a plurality of the resins.

Among the resins, the rosin-based resins, particularly, hydrogenated acid-modified rosin in which hydrogen is added to acid-modified rosin is preferably used. In addition, the hydrogenated acid-modified rosin and the acrylic resin are also preferably used in combination.

An acid value of the resin is preferably 10 mgKOH/g to 250 mgKOH/g. And the amount of the resin is preferably 10% by weight or more and 90% by weight or less with respect to the total amount of the flux.

Examples of the thixo agent include Hydrogenated castor oil, fatty acid amides, oxy fatty acids, and the like. These may be used alone or in combination of a plurality of thixo agents . The amount of the thixo agent is preferably 3% by weight or more and 15% by weight or less with respect to the total amount of the flux.

As the activating agent, for example, an amine salt (an inorganic acid salt or an organic acid salt) such as a hydrogen halide salt of an organic amine, an organic acid, an organic acid salt, and an organic amine salt may be blended. More specific examples of the activating agent include diphenylguanidine hydrobromate, cyclohexylamine hydrobromate, a diethylamine salt, an acid salt, succinic acid, adipic acid, sebacic acid, and the like. These may be used along or in combination of a plurality of the activating agents . The amount of the activating agent is preferably 5% by weight or more and 15% by weight or less with respect to the total amount of the flux.

As the solvent, for example, Isopropyl alcohol, ethanol, acetone, toluene, xylene, ethyl acetate, ethyl cellosolve, butyl cellosolve, glycol ether, and the like can be used. These may be used alone or in combination of a plurality of the solvents . The amount of the solvent is preferably 20% by weight or more and 40% by weight or less with respect to the total amount of the flux.

An antioxidant may be comprised in the flux so as to suppress oxidization of the lead-free solder alloy. Examples of the antioxidant include a hindered phenol-based antioxidant, a phenol-based antioxidant, a bisphenol-based antioxidant, a polymer type antioxidant, and the like. Among these, particularly, the hindered phenol-based antioxidant is preferably used. These may be used alone or in combination of a plurality of the antioxidants. Although not particularly limited, typically, the amount of the antioxidant is preferably 0.5% by weight or more and 5% by weight or less with respect to the total amount of the flux.

Other resins, and an additive such as halogen, a delustering agent, and antifoaming agent, and inorganic filler may be comprised in the flux.

The amount of the additive is preferably 10% by weight or less with respect to the total amount of the flux. In addition, the amount of the additive is more preferably 5% by weight or less with respect to the total amount of the flux.

It is preferable that the ratio between the lead-free solder alloy and the flux is 65 : 35 to 95 : 5 in a ratio of solder alloy : flux. The ratio is more preferably 85 : 15 to 93 : 7, and still more preferably 87 : 13 to 92 : 8.

(3) Electronic Circuit Substrate

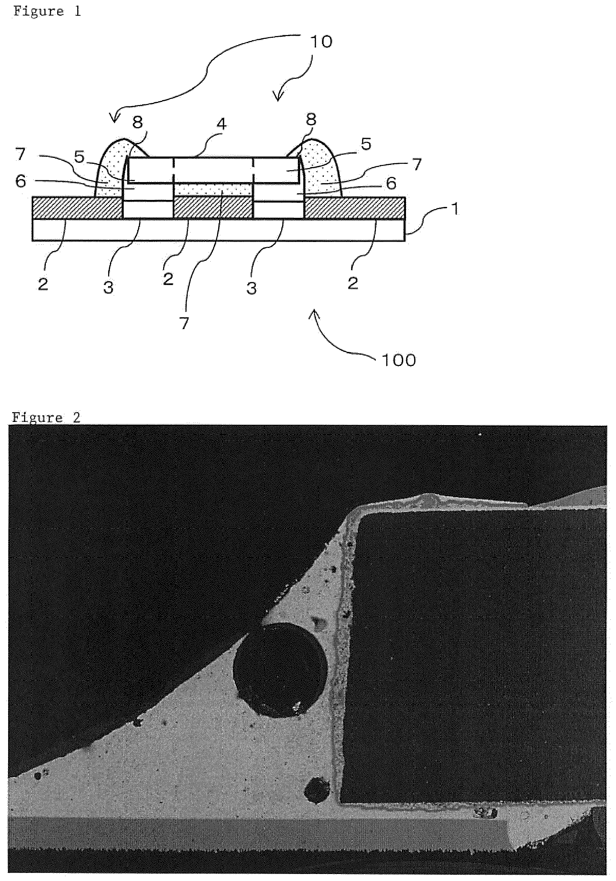

A constitution of the electronic circuit substrate of this embodiment will be described with reference to FIG. 1. An electronic circuit substrate 100 of this embodiment comprises a substrate 1, an insulating layer 2, an electrode portion 3, an electronic component 4, and a solder-joined body 10. The solder-joined body 10 comprises a solder joint 6 and a flux residue 7, and the electronic component 4 comprises an external electrode 5 and an edge portion 8.

As the substrate 1, it is possible to use any substrate such as a printed circuit board, silicon wafer, and a ceramic package substrate which are used in mounting of an electronic component without limitation to these examples .

The electrode portion 3 is electrically joined to the external electrode 5 of the electronic component 4 via the solder joint 6.

In addition, the solder joint 6 is formed by using the solder alloy according to this embodiment.

In the electronic circuit substrate 100 having the above-described constitution according to this embodiment, the solder joint 6 has an alloy composition exhibiting the crack propagation suppressing effect, and thus even if a crack occurs in the solder joint 6, it is possible to suppress propagation of the crack. Particularly, even if the electronic component 4 is without Ni/Pd/Au plating or Ni/Au plating, it is also possible to exhibit the crack propagation suppressing effect in the vicinity of the interface between the solder joint 6 and the electronic component 4. In addition, according to this, it is possible to suppress an electrode peeling-off phenomenon in the electronic component 4.

For example, the electronic circuit substrate 100 is prepared as follows.

First, on the substrate 1 comprising the insulating layer 2 and the electrode portion 3 which are formed in a predetermined pattern, the solder paste composition is printed in accordance with the pattern.

Then, the electronic component 4 is mounted on the substrate 1 after being printed, and the substrate 1 is subjected to reflow at a temperature of 230°C to 260°C. By the reflow, the electronic circuit substrate 100, in which the solder-joined body 10 comprising the solder joint 6 and the flux residue 7 is formed on the substrate 1, and the substrate 1 and the electronic component 4 are electrically connected to each other, is prepared.

In addition, an electronic control device of this embodiment is prepared through integration of the electronic circuit substrate 100.

Examples

Hereinafter, the embodiment will be described with reference to examples and comparative examples. Furthermore, the invention is not limited to the examples.

Preparation of Flux

Flux according to the examples and the comparative examples was obtained by kneading the following components.

Hydrogenated acid-modified rosin (product name: KE-604, manufactured by Arakawa Chemical Industries, Ltd.): 51% by weight
Hardened castor oil: 6% by weight
Dodecane diacid (product name: SL-12, manufactured by OKAMURA OIL MILL CO., LTD): 10% by weight
Malonic acid: 1% by weight
Diphenylguanidine hydrobromate: 2% by weight
Hindered phenol-based antioxidant (product name: IRGANOX 245, manufactured by BASF JAPAN): 1% by weight
Diethylene glycol monohexyl ether: 29% by weight

Preparation of Solder Paste Composition

11.0% by weight of flux described above, and 89.0% by weight of powder (powder particle size: 20 $\mu$m to 38 $\mu$m) of each lead-free solder alloy described in Table 1 and Table 2 were mixed with each other to prepare a solder paste composition according to each of Examples 1 to 24 and Comparative Examples 1 to 19. * Examples 9-12 are not according to the invention.

[Table 1]

|  | Sn | Ag | Cu | In | Sb | Ni | Co | Others |
|---|---|---|---|---|---|---|---|---|
| Example 1 | Balance | 3.0 | 0.5 | - | 3.0 | 0.03 | - | - |
| Example 2 | Balance | 3.0 | 0.5 | - | 3.5 | 0.03 | - | - |
| Example 3 | Balance | 3.0 | 0.5 | - | 4.0 | 0.03 | - | - |
| Example 4 | Balance | 3.0 | 0.5 | - | 5.0 | 0.03 | - | - |
| Example 5 | Balance | 1.0 | 0.5 | - | 3.0 | 0.03 | - | - |
| Example 6 | Balance | 1.0 | 0.5 | - | 5.0 | 0.03 | - | - |
| Example 7 | Balance | 4.0 | 0.5 | - | 3.0 | 0.03 | - | - |
| Example 8 | Balance | 4.0 | 0.5 | - | 5.0 | 0.03 | - | - |
| Example 9* | Balance | 3.0 | 1.0 | - | 3.0 | 0.03 | - | - |
| Example 10* | Balance | 3.0 | 1.0 | - | 5.0 | 0.03 | - | - |
| Example 11* | Balance | 3.0 | 0.7 | - | 4.0 | 0.01 | - | - |
| Example 12* | Balance | 3.0 | 0.7 | - | 4.0 | 0.25 | - | - |
| Example 13 | Balance | 3.0 | 0.7 | - | 4.0 | 0.03 | 0.001 | - |
| Example 14 | Balance | 3.0 | 0.7 | - | 4.0 | 0.03 | 0.008 | - |
| Example 15 | Balance | 3.0 | 0.7 | - | 4.0 | 0.03 | 0.25 | - |
| Example 16 | Balance | 3.0 | 0.5 | 3.0 | 4.0 | 0.03 | 0.008 | - |
| Example 17 | Balance | 3.0 | 0.5 | 6.0 | 4.0 | 0.03 | 0.008 | - |
| Example 18 | Balance | 3.0 | 0.5 | - | 4.0 | 0.03 | 0.008 | 0.05P |
| Example 19 | Balance | 3.0 | 0.5 | - | 4.0 | 0.03 | 0.008 | 0.05Ge |
| Example 20 | Balance | 3.0 | 0.5 | - | 4.0 | 0.03 | 0.008 | 0.05Ga |
| Example 21 | Balance | 3.0 | 0.5 | - | 4.0 | 0.03 | 0.008 | 0.05Fe |
| Example 22 | Balance | 3.0 | 0.5 | - | 4.0 | 0.03 | 0.008 | 0.05Mn |
| Example 23 | Balance | 3.0 | 0.5 | - | 4.0 | 0.03 | 0.008 | 0.05Cr |
| Example 24 | Balance | 3.0 | 0.5 | - | 4.0 | 0.03 | 0.008 | 0.05Mo |

[Table 2]

|  | Sn | Ag | Cu | In | Sb | Ni | Co | Others |
|---|---|---|---|---|---|---|---|---|
| Comparative Example1 | Balance | 3.0 | 0.5 | - | 0.5 | 0.03 | - | - |
| Comparative Example2 | Balance | 3.0 | 0.5 | - | 6.0 | 0.03 | - | - |
| Comparative Example3 | Balance | 0.5 | 0.5 | - | 3.0 | 0.03 | - | - |
| Comparative Example4 | Balance | 0.5 | 0.5 | - | 5.0 | 0.03 | - | - |
| Comparative Example5 | Balance | 4.5 | 0.5 | - | 3.0 | 0.03 | - | - |
| Comparative Example6 | Balance | 4.5 | 0.5 | - | 5.0 | 0.03 | - | - |
| Comparative Example7 | Balance | 3.0 | 1.5 | - | 3.0 | 0.03 | - | - |
| Comparative Example8 | Balance | 3.0 | 1.5 | - | 5.0 | 0.03 | - | - |
| Comparative Example9 | Balance | 3.0 | 0.5 | - | 4.0 | - | - | - |

(continued)

|  | Sn | Ag | Cu | In | Sb | Ni | Co | Others |
|---|---|---|---|---|---|---|---|---|
| Comparative Example10 | Balance | 3.0 | 0.5 | - | 4.0 | 0.3 | - | - |
| Comparative Example11 | Balance | 3.0 | 0.5 | - | 4.0 | 0.03 | 0.3 | - |
| Comparative Example12 | Balance | 3.0 | 0.5 | 6.5 | 4.0 | 0.03 | 0.008 | - |
| Comparative Example13 | Balance | 3.0 | 0.5 | - | 4.0 | 0.03 | 0.008 | 0.1P |
| Comparative Example14 | Balance | 3.0 | 0.5 | - | 4.0 | 0.03 | 0.008 | 0.1Ge |
| Comparative Example15 | Balance | 3.0 | 0.5 | - | 4.0 | 0.03 | 0.008 | 0.1Ga |
| Comparative Example16 | Balance | 3.0 | 0.5 | - | 4.0 | 0.03 | 0.008 | 0.1Fe |
| Comparative Example17 | Balance | 3.0 | 0.5 | - | 4.0 | 0.03 | 0.008 | 0.1Mn |
| Comparative Example18 | Balance | 3.0 | 0.5 | - | 4.0 | 0.03 | 0.008 | 0.1Cr |
| Comparative Example19 | Balance | 3.0 | 0.5 | - | 4.0 | 0.03 | 0.008 | 0.1Mo |

(1) Solder Crack Test (-40°C to 125°C)

• 3.2 mm × 1.6 mm chip component (chip A)

The following tools were prepared.

A chip component (Ni/Sn plating) having a size of 3.2 mm × 1.6 mm.
A glass epoxy substrate comprising a solder resist having a pattern capable of mounting the chip component having the above size, and an electrode (1.6 mm × 1.2 mm) for connection of the chip component.
A metal mask having the same pattern as above-mentioned and a thickness of 150 μm.

The solder paste composition was printed on the glass epoxy substrate by using the metal mask, and the chip component was mounted on the glass epoxy substrate.

The, the glass epoxy substrate was heated by using a reflow furnace (product name: TNP-538EM, manufactured by TAMURA Corporation) to form a solder joint that electrically connects the glass epoxy substrate and the chip component, and the chip component was mounted. As reflow conditions at this time, pre-heating was performed at 170°C to 190°C for 110 seconds, the peak temperature was set to 245°C, the period at which a temperature is maintained at 200°C or higher was set to 65 seconds, the period at which a temperature is maintained at 220°C or higher was set to 45 seconds, the cooling rate from the peak temperature to 200°C was set to 3 °C/second to 8 °C/second, and the oxygen concentration was set to 1500±500 ppm.

Next, the glass epoxy substrate was exposed to an environment in which a thermal shock cycle is repeated 1,000 times, 1,500 times, 2,000 times, 2,500 times, and 3,000 times by using a thermal shock test apparatus (product name: ES-76LMS, manufactured by Hitachi Appliances, Inc.) under conditions of from -40°C (for 30 minutes) to 125°C (30 minutes), and then the glass epoxy substrate was taken out, thereby preparing each test substrate.

Then, a target portion of the test substrate was cut out, and was sealed with an epoxy resin (product name: EPO mount (main agent and curing agent), manufactured by Refine Tec Ltd.). In addition, a central cross-section of the chip component, which is mounted on the test substrate, was polished so that it is visible by using a wet polisher (product name: TegraPol-25, manufactured by Marumoto Struers K.K.), and observation was made on whether or not a crack that occurred in the formed solder joint completely crossed the solder joint to cause rupture by using a scanning electron microscope (product name: TM-1000, manufactured by Hitachi High-Technologies Corporation.), and evaluation was made on the basis of the following standard. Results are illustrated in Table 3 and Table 4. Furthermore, the number of evaluation chips in each thermal shock cycle was set to 10 pieces.

⊙: Crack, which completely crosses the solder joint, does not occur within 3,000 cycles
○: Crack, which completely crosses the solder joint, occurred between 2,501 cycles to 3,000 cycles
△: Crack, which completely crosses the solder joint, occurred between 2,001 cycles to 2,500 cycles
×: Crack, which completely crosses the solder joint, occurred before 2,000 cycles

• 2.0 mm × 1.2 mm chip component (chip B)

A test substrate was prepared under same conditions as in the chip component having a size of 3.2 mm × 1.6 mm but using the following tools, and evaluation was made by the same method as described above. Results are illustrated in Table 3 and Table 4.

A chip component (Ni/Sn plating) having a size of 2.0 mm × 1.2 mm.
A glass epoxy substrate comprising a solder resist having a pattern capable of mounting the chip component having the above size, and an electrode (1.25 mm × 1.0 mm) that connects the solder resist and the chip component.

(2) Solder Crack Test in Sn-plated SON

The following tools were prepared.

1.3 mm pitch small outline non-leaded package (SON) component having a size of 6 mm × 5 mm × 0.8 mm (thickness) (the number of terminals: eight pins, product name: STL60N3LLH5, manufactured by STMicroelectronics).
A glass epoxy substrate comprising a solder resist having a pattern capable of mounting the SON component, and an electrode (that conforms to a recommendation design of a maker) for connection of the SON component.
A metal mask having the same pattern as above-mentioned and a thickness of 150 μm.

The solder paste composition was printed on the glass epoxy substrate by using the metal mask, and the SON component was mounted on the glass epoxy substrate. Then, a thermal shock was applied to the glass epoxy substrate in the same conditions as in the solder crack test (1) except that the glass epoxy substrate was placed in an environment in which the thermal shock cycle is repeated 1,000 times, 2,000 times, and 3,000 times, thereby preparing each test substrate.
Then, a target portion of the test substrate was cut out, and was sealed with an epoxy resin (product name: EPO mount (main agent and curing agent), manufactured by Refine Tec Ltd.). In addition, a central cross-section of the SON component, which is mounted on the test substrate, was polished so that it is visible by using a wet polisher (product name: TegraPol-25, manufactured by Marumoto Struers K.K.), and observation was made on whether or not a crack that occurred in the formed solder joint completely crossed the solder joint to cause rupture by using a scanning electron microscope (TM-1000, manufactured by Hitachi High-Technologies Corporation.). On the basis of the observation, evaluation was made on the solder joint as follows by classifying cracks into a crack that occurred in a solder base (in this specification, the solder base represents a portion of the solder joint other than an interface with an electrode of the SON component and the vicinity of the interface in the solder joint. The same shall apply hereinafter. In addition, the solder base is simply described as "base" in Table 3 and Table 4.), and a crack that occurred in the interface (intermetallic compound thereof) between the solder joint and the electrode of the SON component. Results are illustrated in Table 3 and Table 4. In addition, the number of the evaluation SON in each thermal shock cycle was set to 20 pieces, and one terminal of a gate electrode per one SON was observed to confirm a cross-section of a total of 20 terminals.

• Crack That Occurs in Solder Base

⊙: Crack, which completely crosses the solder base, does not occur within 3,000 cycles
○: Crack, which completely crosses the solder base, occurred between 2,001 cycles to 3,000 cycles
△: Crack, which completely crosses the solder base, occurred between 1,001 cycles to 2,000 cycles
×: Crack, which completely crosses the solder base, occurred before 1,000 cycles

• Crack That Occurs in Interface between Solder Joint and SON component

⊙: Crack, which completely crosses the interface, does not occur within 3,000 cycles
○: Crack, which completely crosses the interface, occurred between 2,001 cycles to 3,000 cycles
△: Crack, which completely crosses the interface, occurred between 1,001 cycles to 2,000 cycles
×: Crack, which completely crosses the interface, occurred before 1,000 cycles

(3) Solder Crack Test (-40°C to 150°C)

Since an in-vehicle substrate and the like are placed in a harsh environment in which a temperature difference is significant, a solder alloy that is used for these is required to exhibit satisfactory crack propagation suppressing effect in such an environment. Accordingly, a solder crack test in a temperature difference of -40°C to 150°C was performed by using a liquid bath type thermal shock test apparatus so as to clarify whether or not the solder alloy according to this embodiment can exhibit the effect even under such conditions. Conditions of the test are as follows.

A test substrate on which a chip component of $3.2 \times 1.6$ mm was mounted and a test substrate on which a chip component of $2.0 \times 1.2$ mm was mounted were prepared in the same conditions as in the solder crack test (1) except that each glass epoxy substrate after formation of the solder joint was exposed to an environment in which a thermal shock cycle is repeated 1,000 times, 2,000 times, and 3,000 times by using a liquid bath type thermal shock test apparatus (product name: ETAC WINTECH LT80, manufactured by Kusumoto Co., Ltd.) that was set to conditions of from -40°C (for 5 minutes) to 150°C (5 minutes).

Then, a target portion of the test substrate was cut out, and was sealed with an epoxy resin (product name: EPO mount (main agent and curing agent), manufactured by Refine Tec Ltd.). In addition, a central cross-section of the chip component, which is mounted on the test substrate, was polished so that it is visible by using a wet polisher (product name: TegraPol-25, manufactured by Marumoto Struers K.K.), and observation was made on whether or not a crack that occurred in the formed solder joint completely crossed the solder joint to cause rupture by using a scanning electron microscope (TM-1000, manufactured by Hitachi High-Technologies Corporation.), and evaluation was made on the basis of the following standard. Results are illustrated in Table 3 and Table 4. Furthermore, the number of evaluation chips in each thermal shock cycle was set to 10 pieces.

⊙: Crack, which completely crosses the solder joint, does not occur within 3,000 cycles
○: Crack, which completely crosses the solder joint, occurred between 2,001 cycles to 3,000 cycles
△: Crack, which completely crosses the solder joint, occurred between 1,001 cycles to 2,000 cycles
×: Crack, which completely crosses the solder joint, occurred before 1,000 cycles

(4) Void Test

A test substrate on which a chip component of $2.0 \times 1.2$ mm was mounted were prepared in the same conditions (on which the solder joint is formed) as in the solder crack test (1).

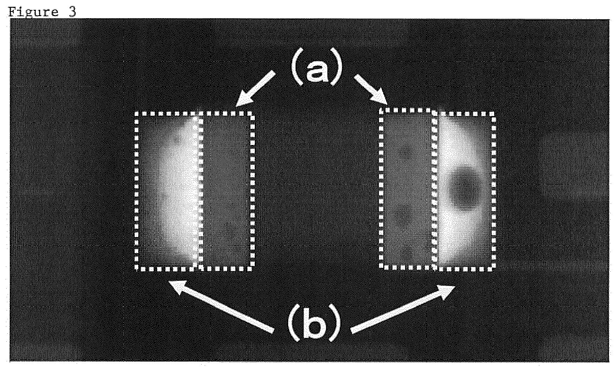

Then, a surface state of each of the test substrate was observed with an X-ray transmission apparatus (product name: SMX-160E, manufactured by Shimadzu Corporation.) to obtain the average value of the area ratio of voids that occupy regions (region (a) surrounded by a broken line in FIG. 3) under electrodes of chip components (total void area ratio-the same shall apply hereinafter.), and the area ratio of voids that occupy regions in which fillets were formed (region (b) surrounded by a broken line in FIG. 3), in 40 lands of each test substrate, and evaluation was made as follows. Results are illustrated in Table 3 and Table 4.

⊙: Average value of the area ratio of the voids was 3% or less, and the void occurrence suppressing effect was very satisfactory
○: Average value of the area ratio of the voids was 3% or greater and less than 5%, and the void occurrence suppressing effect was satisfactory
△: Average value of the area ratio of the voids was 5% or greater and less than 8%, and the void occurrence suppressing effect was sufficient
×: Average value of the area ratio of the voids was greater than 8%, and the void occurrence suppressing effect was not sufficient

**[0101]** * Examples 9-12 are not according to the invention.

[Table 3]

| | Solder crack (-40°C~125°C) | | Sn-plated SON crack | | Solder crack (-40°C~150°C) | | Void | |
| --- | --- | --- | --- | --- | --- | --- | --- | --- |
| | Chip A | Chip B | Base material | Interface | Chip A | Chip B | Under electrode | Fillet |
| Example1 | △ | ○ | ○ | ○ | △ | △ | ○ | △ |
| Example2 | ○ | ⊙ | ○ | ○ | △ | △ | ○ | △ |

(continued)

| | Solder crack (-40°C~125°C) | | Sn-plated SON crack | | Solder crack (-40°C~150°C) | | Void | |
|---|---|---|---|---|---|---|---|---|
| | Chip A | Chip B | Base material | Interface | Chip A | Chip B | Under electrode | Fillet |
| Example3 | ⊙ | ⊙ | ⊙ | ○ | △ | ○ | ○ | △ |
| Example4 | ⊙ | ⊙ | ⊙ | ○ | △ | ○ | ○ | △ |
| Example5 | △ | △ | ○ | ○ | △ | △ | △ | △ |
| Example6 | △ | ○ | ○ | ○ | △ | △ | △ | △ |
| Example7 | ○ | ○ | ○ | ○ | △ | ○ | ○ | △ |
| Example8 | ⊙ | ⊙ | ⊙ | ○ | △ | ○ | ○ | △ |
| Example9* | ○ | ○ | ○ | ○ | △ | △ | △ | △ |
| Example10* | ⊙ | ⊙ | ⊙ | ○ | △ | ○ | △ | △ |
| Example11* | ⊙ | ⊙ | ⊙ | ○ | △ | ○ | ○ | △ |
| Example12* | ⊙ | ⊙ | ⊙ | ⊙ | △ | △ | △ | △ |
| Example13 | ⊙ | ⊙ | ⊙ | ○ | △ | ○ | ○ | △ |
| Example14 | ⊙ | ⊙ | ⊙ | ○ | ○ | ○ | ○ | △ |
| Example15 | ⊙ | ⊙ | ⊙ | ⊙ | △ | △ | △ | △ |
| Example16 | ⊙ | ⊙ | ⊙ | ○ | ○ | ⊙ | △ | △ |
| Example17 | ⊙ | ⊙ | ⊙ | ○ | ○ | ⊙ | △ | △ |
| Example18 | ⊙ | ⊙ | ⊙ | ○ | ○ | ○ | ○ | △ |
| Example19 | ⊙ | ⊙ | ⊙ | ○ | ○ | ○ | ○ | △ |
| Example20 | ⊙ | ⊙ | ⊙ | ○ | ○ | ○ | ○ | △ |
| Example21 | ⊙ | ⊙ | ⊙ | ○ | ○ | ○ | △ | △ |
| Example22 | ⊙ | ⊙ | ⊙ | ○ | ○ | ○ | ○ | △ |
| Example23 | ⊙ | ⊙ | ⊙ | ○ | ○ | ○ | △ | △ |
| Example24 | ⊙ | ⊙ | ⊙ | ○ | ○ | ○ | △ | △ |

[Table 4]

| | Solder crack (-40°C~125°C) | | Sn-plated SON crack | | Solder crack (-40°C~150°C) | | Void | |
|---|---|---|---|---|---|---|---|---|
| | Chip A | Chip B | Base material | Interface | Chip A | Chip B | Under electrode | Fillet |
| Comparative Example1 | × | △ | △ | ○ | × | × | ○ | ○ |
| Comparative Example2 | △ | △ | ○ | ○ | × | × | × | × |
| Comparative Example3 | × | △ | △ | ○ | × | × | × | × |
| Comparative Example4 | △ | △ | ○ | ○ | × | × | × | × |

(continued)

| | Solder crack (-40°C~125°C) | | Sn-plated SON crack | | Solder crack (-40°C~150°C) | | Void | |
|---|---|---|---|---|---|---|---|---|
| | Chip A | Chip B | Base material | Interface | Chip A | Chip B | Under electrode | Fillet |
| Comparative Example5 | △ | △ | ○ | ○ | × | × | × | △ |
| Comparative Example6 | ○ | ○ | ○ | ○ | × | △ | × | × |
| Comparative Example7 | △ | △ | ○ | ○ | × | × | × | × |
| Comparative Example8 | ○ | ○ | ○ | ○ | × | △ | × | × |
| Comparative Example9 | ⊙ | ⊙ | ⊙ | × | △ | △ | ○ | ○ |
| Comparative Example10 | △ | ○ | ○ | ⊙ | × | △ | △ | × |
| Comparative Example11 | △ | ○ | ○ | ⊙ | × | △ | △ | × |
| Comparative Example12 | △ | △ | ○ | ○ | × | △ | × | △ |
| Comparative Example13 | △ | △ | △ | ○ | × | × | × | × |
| Comparative Example14 | △ | △ | △ | ○ | × | × | × | × |
| Comparative Example15 | △ | △ | △ | ○ | × | × | × | × |
| Comparative Example16 | △ | △ | △ | ○ | × | × | × | × |
| Comparative Example17 | △ | △ | △ | ○ | × | × | × | × |
| Comparative Example18 | △ | △ | △ | ○ | × | × | × | × |
| Comparative Example19 | △ | △ | △ | ○ | × | × | × | × |

As described above, in the solder joint that is formed by using the lead-free solder alloy according to the examples, even in a harsh environment in which a temperature difference is significant and vibration is applied, even though Bi is not set as an essential element, it is possible to exhibit the crack propagation suppressing effect in the solder joints and in the vicinity of the interfaces regardless of the chip size, and regardless of whether or not the electrode is with Ni/Pd/Au plating or Ni/Au plating. Particularly, it can be seen that the solder joints of the examples exhibit a satisfactory crack suppressing effect even in a harsh environment in which the temperature difference is set -40°C to 150°C by using the liquid bath type thermal shock test apparatus.

Particularly, in Example 13 to Example 24 in which both Ni and Co are used, it can be seen that it is possible to exhibit a satisfactory crack propagation suppressing effect in the solder joint and in the vicinity of the interface.

In addition, even if Ni or Co is comprised in an amount of 0.25% by weight as in Example 12 or Example 15, it is possible to suppress occurrence of voids in the fillets.

Accordingly, an electronic circuit substrate that is exposed to a significant temperature difference and comprises the solder joint may be appropriately used as an electronic circuit such as an in-vehicle electronic circuit substrate for which high reliability is required. In addition, the electronic circuit substrate can be appropriately used in an electronic control device for which further high reliability is required.

REFERENCE SIGN LIST

1        substrate
2        insulating layer
3        electrode part
4        electronic component
5        external electrode
6        solder joint
7        flux residue
8        end part
10       soldered body
110      electronic circuit board


**Claims**

1.  A lead-free solder alloy comprising:

    2% by weight or more and 4% by weight or less of Ag;
    0.5% by weight or more and 0.7% by weight or less of Cu;
    3% by weight or more and 5% by weight or less of Sb; and
    0.03% by weight of Ni, the remainder being Sn;
    optionally further comprising: 0.001% by weight or more and 0.25% by weight or less of Co;
    optionally further comprising: 6% by weight or less of In;
    optionally further comprising: at least one of P, Ga, and Ge in a total amount of 0.001% by weight or more and 0.05% by weight or less; and
    optionally further comprising: at least one of Fe, Mn, Cr, and Mo in a total amount of 0.001% by weight or more and 0.05% by weight or less.

2.  The lead-free solder alloy according to claim 1, further comprising:
    0.001% by weight or more and 0.008% by weight or less of Co.

3.  The lead-free solder alloy according to claim 1 or 2,
    wherein the amount of Sb is 3.5% by weight or more.

4.  The lead-free solder alloy of claim 2,
    wherein the amount of Ag, Cu, Sb, Ni, and Co, in terms of % by weight, satisfies the entirety of the following Expressions (A) to (D).

    $$1.6 \leq \text{the amount of Ag} + (\text{the amount of Cu}/0.5) \leq 5.4 \ldots \text{(A)}$$

    $$0.73 \leq (\text{the amount of Ag}/4) + (\text{the amount of Sb}/5) \leq 2.10 \ldots \text{(B)}$$

    $$5 \leq \text{the amount of Sb}/\text{the amount of Cu} \leq 11.9 \ldots \text{(C)}$$

$$0 < (\text{the amount of Ni}/0.25) + (\text{the amount of Co}/0.25) \leq 1.19 \ldots (D)$$

5. An electronic circuit substrate comprising:
a solder joint (6) that is formed by using the lead-free solder alloy according to any one of claims 1 to 4.

6. An electronic control device comprising:
the electronic circuit substrate according to claim 5.

**Patentansprüche**

1. Bleifreie Lötlegierung, umfassend:

2 Gew.-% oder mehr und 4 Gew.-% oder weniger Ag,
0,5 Gew.-% oder mehr und 0,7 Gew.-% oder weniger Cu,
3 Gew.-% oder mehr und 5 Gew.-% oder weniger Sb und
0,03 Gew.-% Ni, wobei der Rest Sn ist,
optional ferner umfassend: 0,001 Gew.-% oder mehr und 0,25 Gew.-% oder weniger Co,
optional ferner umfassend: 6 Gew.-% oder weniger In,
optional ferner umfassend: zumindest eines von P, Ga und Ge in einer Gesamtmenge von 0,001 Gew.-% oder mehr und 0,05 Gew.-% oder weniger und
optional ferner umfassend: zumindest eines von Fe, Mn, Cr und Mo in einer Gesamtmenge von 0,001 Gew.-% oder mehr und 0,05 Gew.-% oder weniger.

2. Bleifreie Lötlegierung nach Anspruch 1, ferner umfassend:
0,001 Gew.-% oder mehr und 0,008 Gew.-% oder weniger Co.

3. Bleifreie Lötlegierung nach Anspruch 1 oder 2,
wobei die Menge an Sb 3,5 Gew.-% oder mehr beträgt.

4. Bleifreie Lötlegierung nach Anspruch 2,
wobei die Menge an Ag, Cu, Sb, Ni und Co ausgedrückt als Gew.-% die Gesamtheit der folgenden Ausdrücke (A) bis (D) erfüllt.

$$1,6 \leq \text{die Menge an Ag} + (\text{die Menge an Cu}/0,5) \leq 5,4 \ldots (A)$$

$$0,73 \leq (\text{die Menge an Ag} / 4) + (\text{die Menge an Sb} / 5) \leq 2,10 \ldots (B)$$

$$5 \leq \text{die Menge an Sb} / \text{die Menge an Cu} \leq 11,9 \ldots (C)$$

$$0 < (\text{die Menge an Ni} / 0,25) + (\text{die Menge an Co} / 0,25) \leq 1,19 \ldots (D)$$

5. Elektronisches Schaltungssubstrat, umfassend:
eine Lötverbindung (6), die unter Verwendung der bleifreien Lötlegierung nach einem der Ansprüche 1 bis 4 gebildet ist.

6. Elektronische Steuervorrichtung, umfassend:
das elektronische Schaltungssubstrat nach Anspruch 5.

**Revendications**

1.  Alliage de brasage sans plomb comprenant :

    2 % en poids ou plus et 4 % en poids ou moins d'Ag ;
    0,5 % en poids ou plus et 0,7 % en poids ou moins de Cu ;
    3 % en poids ou plus et 5 % en poids ou moins de Sb ; et
    0,03 % en poids de Ni, le reste étant du Sn ;
    comprenant éventuellement en outre : 0,001 % en poids ou plus et 0,25 % en poids ou moins de Co ;
    comprenant éventuellement en outre : 6 % en poids ou moins d'In ;
    comprenant éventuellement en outre : au moins l'un parmi P, Ga et Ge en une quantité totale de 0,001 % en poids ou plus et 0,05 % en poids ou moins ; et
    comprenant éventuellement en outre : au moins l'un parmi Fe, Mn, Cr et Mo en une quantité totale de 0,001 % en poids ou plus et 0,05 % en poids ou moins.

2.  Alliage de brasage sans plomb selon la revendication 1, comprenant en outre :
    0,001 % en poids ou plus et 0,008 % en poids ou moins de Co.

3.  Alliage de brasage sans plomb selon la revendication 1 ou 2,
    dans lequel la quantité de Sb est de 3,5 % en poids ou plus.

4.  Alliage de brasage sans plomb selon la revendication 2,
    dans lequel la quantité d'Ag, Cu, Sb, Ni et Co, en termes de % en poids, satisfait à la totalité des expressions (A) à (D) suivantes :

$$1,6 \leq \text{quantité d'Ag} + (\text{quantité de Cu}/0,5) \leq 5,4 \qquad \ldots \text{(A)}$$

$$0,73 \leq (\text{quantité d'Ag}/4) + (\text{quantité de Sb}/5) \leq 2,10 \qquad \ldots \text{(B)}$$

$$5 \leq \text{quantité de Sb} / \text{quantité de Cu} \leq 11,9 \qquad \ldots \text{(C)}$$

$$0 < (\text{quantité de Ni}/0,25) + (\text{quantité de Co}/0,25) \leq 1,19 \ldots \text{(D)}$$

5.  Substrat de circuit électronique comprenant :
    un joint de brasure (6) qui est formé par utilisation de l'alliage de brasage sans plomb selon l'une quelconque des revendications 1 à 4.

6.  Dispositif de commande électronique comprenant :
    le substrat de circuit électronique selon la revendication 5.

Figure 1

Figure 2

Figure 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5228685 A
- JP 9326554 A
- JP 2000190090 A
- JP 2000349433 A
- JP 2008028413 A
- WO 2009011341 A
- JP 2012081521 A
- US 20160279741 A
- US 20160056570 A
- US 20170014955 A
- US 20160325384 A
- US 20160368104 A